# FASCICULE DE BREVET EUROPEEN

(11) **EP 0 485 024 B1**
(45) Date de publication et mention de la délivrance du brevet: **19.07.1995**
(21) Numéro de dépôt: 91202826.3
(22) Date de dépôt: 31.10.1991
(51) Int. Cl.: H04N 9/68, H04N 9/72

(54) **Procédé et dispositif pour le réglage de niveau de signaux vidéo dans un appareil de réception de télévision**
Gerät und Verfahren zur Steuerung von Videosignalpegeln in einem Fernsehgerät
Method and device for controlling the level of videosignals in a television receiver

(30) Priorité: 09.11.1990 FR 9013913
(43) Date de publication de la demande: 13.05.1992
(73) Titulaire: PHILIPS ELECTRONIQUE GRAND PUBLIC, 92150 Suresnes (FR); Philips Electronics N.V., 5621 BA Eindhoven (NL)
(72) Inventeur: Lafon, Philippe, F-75008 Paris (FR)
(74) Mandataire: Caron, Jean

(56) Documents cités:
- FR-A- 2 523 793
- GB-A- 2 157 530
- ELEKTOR ELECTRONICS, vol. 16, no. 178, Mai 1990, Londres,GB;J. BUITING: "The multi- MAC concept"

## Description

La présente invention concerne un procédé pour le réglage de niveau de signaux video dans un appareil de réception de télévision qui comporte un décodeur video muni d'un filtre numérique à coefficients programmables et qui est muni aussi pour les retours de ligne d'un générateur de période d'effacement, dont le calage par rapport au signal de synchronisation de ligne est réglable.

Elle concerne également un dispositif pour le réglage de niveau de signaux video dans un appareil de réception de télévision qui comporte un décodeur video muni d'un filtre numérique à coefficients programmables et qui est muni aussi pour les retours de ligne d'un générateur de période d'effacement, dont le calage par rapport au signal de synchronisation de ligne est réglable.

Un tel décodeur video est présent entre autres dans les circuits pour la télévision selon le standard MAC ou D2-MAC.

Le signal video étant néanmoins partiellement traité sous forme analogique, il présente en sortie des écarts dûs aux dispersions des composants, et demande donc des réglages d'équilibrage et de niveau en tension continue.

Dans une image en noir et blanc, les composantes de couleur doivent avoir toutes la même amplitude, il faut donc régler leur équilibrage, pour éviter que l'image ait une dominante colorée.

Le niveau de noir de chaque composante doit aussi être égal d'une couleur à l'autre et de plus être aussi proche que possible du niveau de noir du retour ligne, sinon les noirs apparaissent gris.

Lorsqu'un dépanneur change certains composants d'un récepteur MAC chez un client, il faut parfois ensuite qu'il refasse les réglages. Pour cela, il emploie habituellement un générateur de signaux MAC, appelé "mire".

Une mire peut fournir entre autres une image noir-blanc comme référence de niveau à l'entrée du décodeur. Avec cette image, on peut ajuster en sortie les amplitudes maximales ("blanc") de chaque couleur, puis aligner les niveaux de noir. Pour visualiser les signaux, on utilise un oscilloscope. Néanmoins la nécessité de disposer d'une mire MAC est une sujétion importante, à cause de son prix et de son encombrement et aussi, actuellement, à cause de sa rareté.

En outre dans un décodeur numérique, la CAG est définie au moyen d'une valeur numérique, et si cette valeur est exprimée par un nombre de bits réduit, il peut y avoir des allers-retours entre deux valeurs au cours de l'opération de réglage ce qui nuit à la précision du réglage.

L'invention repose sur l'idée de se servir du décodeur lui même pour générer sur ses propres sorties R, V, B des signaux de référence, et de les utiliser pour le réglage.

Le procédé selon l'invention est ainsi particulièrement remarquable en ce qu'on met à zéro les coefficients numériques du filtre, on met le filtre en service, on décale la période d'effacement par rapport au signal de synchronisation de ligne, puis on procède aux réglages de niveau proprement dits selon une méthode connue, et enfin on rétablit à son état normal le filtre et le calage de la période d'effacement.

Ainsi on dispose d'une mire numérique intégrée, qui permet de réaliser les réglages. Cette mire intégrée est totalement invariable dans le temps (la CAG n'a pas d'incidence sur elle), et de plus elle est exempte de bruit (un niveau de gris moyen pourrait aussi être généré en déconnectant l'entrée du décodeur, mais les sorties seraient alors bruitées et instables).

Pour mettre en oeuvre le réglage proprement dit, l'appareil à régler étant muni de moyens de réglage indépendants pour les amplitudes des signaux video et pour leur niveau en tension continue dans les trois couleurs, après avoir mis à zéro les coefficients numériques du filtre, mis le filtre en service, et décalé la période d'effacement par rapport au signal de synchronisation de ligne, on décrémente ou incrémente le réglage du niveau d'amplitude pour une des trois couleurs jusqu'à obtenir l'amplitude recherchée, puis on règle l'amplitude de la même façon pour les deux autres couleurs, puis on décrémente ou incrémente le réglage du niveau en tension continue pour une des trois couleurs jusqu'à obtenir le niveau de noir recherché, et enfin on règle de la même façon le niveau en tension continue pour les deux autres couleurs.

Avantageusement, avant de réaliser le réglage des amplitudes, on met au maximum les trois valeurs de réglage du niveau de tension continue.

Un dispositif selon l'invention comprend des moyens pour mettre à zéro les coefficients numériques du filtre, des moyens pour mettre le filtre en service, et des moyens pour décaler la période d'effacement par rapport au signal de synchronisation de ligne.

Avantageusement, un tel dispositif est muni de moyens pour, lorsque l'appareil récepteur reçoit une séquence particulière de codes de commande destinée à le placer en mode "service", mettre le filtre dans l'état prévu et décaler la période d'effacement.

La description qui va suivre, en regard des dessins annexés décrivant des exemples non limitatifs fera bien comprendre comment l'invention peut être réalisée.

La figure 1 est un schéma d'un décodeur numérique dans lequel l'invention peut s'appliquer.

La figure 2 illustre une forme d'onde pour expliquer la mise en oeuvre du procédé de l'invention.

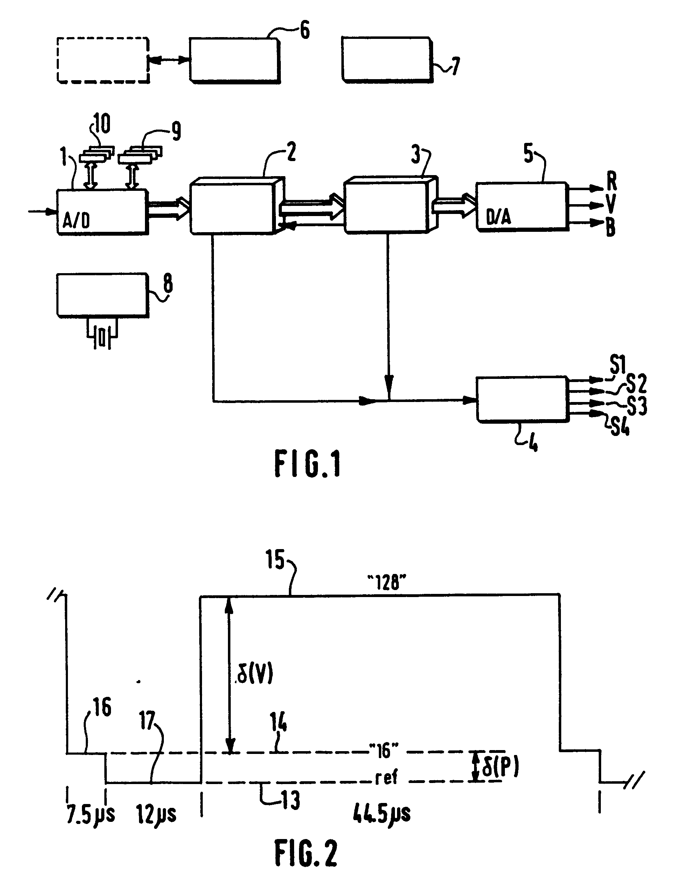

Le décodeur de la figure 1 est un décodeur de type numérique pour des signaux de télévision codés en D2-MAC. Il est évident que l'invention peut aussi bien s'appliquer à des signaux codés en MAC et également à n'importe quel circuit de décodage numérique, pourvu qu'il corresponde à la définition donnée en préambule.

Le décodeur de la figure 1 est constitué de :
* Un circuit 1 convertisseur analogique / numérique d'entrée.
* Un circuit 2 servant aux opérations de désembrouillage du signal video, et des services numériques parmi lesquels les sons. Ce circuit contient en outre un filtre numérique.
* Un circuit 3 assurant la fonction de décodage D2-MAC ou DMAC proprement dit.
* Un circuit 4 qui reçoit les sons décodés et effectue numériquement les opérations connues de désaccentuation, mixage, filtrage, et réalise enfin une conversion numérique / analogique en sortie, pour fournir les signaux audio analogiques S1, S2, S3, S4.
* Un circuit 5 pour le dématriçage couleur et les convertisseurs pour fournir en sortie les signaux analogiques des trois couleurs R, V, B, respectivement rouge, vert, bleu.
* Un microprocesseur 6 pour commander entre autres la mise en service ou le réglage des éléments de l'appareil, et un circuit de base de temps 8 qui fournit aux éléments de l'appareil les signaux de synchronisation qui leur sont nécessaires.

L'ensemble de ces circuits est programmable par des ordres ammenés sur un bus, non représenté.

Le circuit 5 est programmable numériquement avec pour effet de faire varier l'amplitude (analogique) des composantes R, V, B de sortie. Il contient trois registres 9 que l'on appelera BR "Blanc du Rouge" (il est d'usage d'appeler blanc le maximum du signal video, même s'il s'agit d'un signal coloré), et de même BV, BB pour les deux autres couleurs Vert et Bleu. L'enregistrement d'une valeur dans un de ces registres a pour effet de régler le gain de l'amplificateur correspondant. De même le circuit 5 contient trois registres 10 que l'on appelera NR "Noir du Rouge", et de même NV, NB pour les deux autres couleurs, pour les valeurs de réglage du niveau de noir de chaque composante, valeurs qui ont pour effet de décaler le niveau dit en tension continue des signaux correspondants.

Le niveau du signal video est codé numériquement sur huit bits, c'est-à-dire qu'il peut aller de 0 à 256. On définira un niveau en donnant sa valeur numérique entre 0 et 256 : par exemple un niveau de luminance "128" est un niveau de gris moyen (moitié de la luminance maximale).

Le circuit 2 contient un filtre numérique qui peut servir normalement à divers usages : interpolation pour convertir le format d'image d'un format 4/3 à un format 16/9, ou simple filtrage de la bande de base. Ce filtre, par exemple à seize coefficients, est programmable. Pour la mise en oeuvre du procédé, on programme les coefficients à la valeur zéro, puis on met en service le filtre : pour cela on peut l'activer en position "conversion 16/9" ou en position "filtrage en bande de base", cela étant indifférent puisque de toute façon les coefficients sont à zéro. Ceci a pour résultat que le circuit 2 engendre des échantillons à mi-valeur par rapport au maximum, ce qui correspond à un gris "128" sans couleur.

On dispose donc d'un signal sur chaque composante, constitué d'un palier de gris et du palier de noir de retour ligne (référence). Il faut également disposer d'un "noir image", c'est-à-dire du niveau qui correspond à une partie noire dans une image.

Pendant la période dite de suppression au retour de ligne le circuit 3 envoie des échantillons au circuit 5, échantillons au niveau "16". Ce niveau correspond pratiquement à un niveau de noir image (suivant le fonctionnement de la CAG, le niveau de noir image est typiquement compris entre "12" et "16"). En utilisation normale, ce niveau n'est pas converti en sortie dans le circuit 5, parceque ce dernier reçoit du circuit 3 une impulsion d'effacement dite de "blanking horizontal" qui force les sorties du circuit 5 au niveau du noir de référence. Cette impulsion dure douze microsecondes.

La deuxième idée à la base de l'invention est donc de décaler le signal d'effacement dans l'image par rapport au retour ligne, de façon à rendre apparent le noir au niveau "16".

Le signal obtenu est représenté sur la figure 2. Il comporte un long palier 15 de gris "128", un retour de ligne 17 pendant lequel le signal est au niveau du noir de référence (indiqué par la ligne en tirets 13), une période d'effacement 16 au niveau de noir "16" (indiqué par la ligne en tirets 14), période d'effacement qui est décalée en avance par rapport au retour de ligne 17. On désire par exemple régler l'amplitude totale δ(V) des composantes entre 0,7 et 0,75 volt (pour une image noir/blanc à 100%). La composante δ(P) doit être inférieure à 30 mV (alignement en tension continue).

Le signal (référencé 16) à mesurer pour régler le noir est présent pendant le retour de ligne physique : il n'apparaît pas sur l'écran cathodique du récepteur, mais il apparaît sur l'oscilloscope !

La mire numérique intégrée ainsi réalisée est convertie en analogique par le circuit 5 sur les sorties R, V, B, ce qui permet de réaliser les réglages avec seulement un oscilloscope.

Dans la procédure de réglage, il est avantageux de placer d'abord les valeurs NR, NV, NB au maximum de façon à être sûr de ne pas écrêter le signal par le bas, ce qui pourrait fausser la mesure d'amplitude.

Ensuite on décrémente ou incrémente le réglage du niveau de l'amplitude (ici "128"), en agissant sur la valeur dans un des registres de valeur de "blanc", par exemple BR pour la couleur rouge, jusqu'à obtenir l'amplitude recherchée du signal rouge, puis on règle de la même façon l'amplitude pour les deux autres couleurs, en agissant sur les registres BV, BB. Une fois ce réglage fini, les amplitudes sont parfaitement équilibrées (mieux que 1%). Dans l'exemple choisi ici l'amplitude varie autour d'un niveau moyen : en pratique, si on diminue l'amplitude, le pied de la forme d'onde de la figure 2 monte en même temps que le sommet descend.

C'est pourquoi il convient de régler d'abord l'amplitude, et ensuite d'établir le bon niveau du pied de la courbe, ou de le rétablir s'il a été modifié par le réglage d'amplitude. Pour établir ce bon niveau, on décrémente ou incrémente le réglage du niveau en tension continue, en agissant sur la valeur dans un des registres de valeur du noir, par exemple NR pour la couleur rouge, jusqu'à obtenir l'amplitude recherchée du "noir" du signal rouge, puis on règle de la même façon l'amplitude pour les deux autres couleurs, en agissant sur les registres NV, NB. Après ce réglage, les trois valeurs de noir ont des amplitudes égales pratiquement à "16".

Le dispositif comporte une mémoire 7 de type EEPROM, dans laquelle les six valeurs de consigne sont écrites après le réglage. Lors de chaque remise en route de l'appareil, le microprocesseur 6 lit ces valeurs dans la mémoire 7 et les inscrit dans les registres idoines.

La plupart des appareils sont équipés d'un boitier de télécommande donnant à l'usager la possibilité de déterminer à distance les réglages dont il a la disposition. Ce boitier émet un rayonnement infrarouge codé qui donne des ordres à l'appareil. Une séquence particulière de codes de commande, qui est connue du dépanneur, est destinée à mettre le récepteur en mode "service". Sur décodage de cette séquence particulière, le microprocesseur 6 met le filtre dans l'état prévu et décale la période d'effacement.

## Revendications

1. Procédé pour le réglage de niveau de signaux video dans un appareil de réception de télévision qui comporte un décodeur video muni d'un filtre numérique à coefficients programmables et qui est muni aussi pour les retours de ligne d'un générateur de période d'effacement, dont le calage par rapport au signal de synchronisation de ligne est réglable, caractérisé en ce qu'on met à zéro les coefficients numériques du filtre, on met le filtre en service, on décale la période d'effacement par rapport au signal de synchronisation de ligne, puis on procède aux réglages de niveau proprement dits selon une méthode connue, et enfin on rétablit à son état normal le filtre et le calage de la période d'effacement.

2. Procédé selon la revendication 1 caractérisé en ce que, l'appareil à régler étant muni de moyens de réglage indépendants pour les amplitudes des signaux video et pour leur niveau en tension continue dans les trois couleurs, après avoir mis à zéro les coefficients numériques du filtre, mis le filtre en service, et décalé la période d'effacement par rapport au signal de synchronisation de ligne, on décrémente ou incrémente le réglage du niveau d'amplitude pour une des trois couleurs jusqu'à obtenir l'amplitude recherchée, puis on règle l'amplitude de la même façon pour les deux autres couleurs, puis on décrémente ou incrémente le réglage du niveau en tension continue pour une des trois couleurs jusqu'à obtenir le niveau de noir recherché, et enfin on règle de la même façon le niveau en tension continue pour les deux autres couleurs.

3. Procédé selon l'une des revendications 1 ou 2, caractérisé en ce que, avant de réaliser le réglage des amplitudes, on met au maximum les trois valeurs de réglage du niveau de tension continue.

4. Dispositif pour le réglage de niveau de signaux video dans un appareil de réception de télévision qui comporte un décodeur video muni d'un filtre numérique à coefficients programmables et qui est muni aussi pour les retours de ligne d'un générateur de période d'effacement, dont le calage par rapport au signal de synchronisation de ligne est réglable, caractérisé en ce qu'il comprend des moyens pour mettre à zéro les coefficients numériques du filtre, des moyens pour mettre le filtre en service, et des moyens pour décaler la période d'effacement par rapport au signal de synchronisation de ligne.

5. Dispositif selon la revendication 4, caractérisé en ce qu'il est muni de moyens pour, lorsque l'appareil récepteur reçoit une séquence particulière de codes de commande destinée à le placer en mode "service", mettre le filtre dans l'état prévu et décaler la période d'effacement.

## Patentansprüche

1. Ein Verfahren für die Regelung des Videosignalniveaus in einem TV-Empfangsgerät, das mit einem Videodecoder ausgerüstet ist, der über einen numerischen Filter mit programmierbaren Koeffizienten verfügt und der dazu für den Zeilenrücklauf mit einem Löschzeitengenerator versehen ist, wobei die Versetzung in bezug auf das Zeilensynchronisationssignal regelbar ist, dessen Merkmal ist, daß die numerischen Koeffizienten des Filters auf Null gestellt werden, die Filter in Betrieb genommen werden, die Löschzeit im Verhältnis zum Zeilensynchronisationssignal versetzt wird, dann die eigentlichen Niveauregelungen nach der bekannten Methode vorgenommen werden und zuletzt der Filter und die Versetzung der Löschzeit in ihren normalen Zustand zurückgebracht werden.

2. Ein Verfahren laut Anspruch 1, das sich dadurch auszeichnet, daß das zu regelnde Gerät mit unabhängigen Regelvorrichtungen für die Amplitude des Videosignals und das Niveau der Gleichspannung der drei Farben ausgestattet ist, nachdem die numerischen Koeffizienten des Filters auf Null gestellt wurden, der Filter in Betrieb genommen wurde und die Löschzeit in bezug auf das Zeilensynchronisationssignal versetzt wurde, die Dekrementierung oder Inkrementierung der Niveauregelung der Amplitude einer der drei Farben bis zum Erhalt der erforderlichen Amplitude vorgenommen wurde, und dann die Amplitude der anderen beiden Farben auf dieselbe Art geregelt wurde, durch Dekrementierung oder Inkrementierung die Niveauregelung der Gleichspannung einer der drei Farben bis zum Erhalt des erforderlichen Schwarzniveaus und schließlich der Regelung auf dieselbe Art des Gleichspannungsniveaus der anderen beiden Farben.

3. Verfahren laut der Ansprüche 1 oder 2 mit dem Merkmal, daß man die drei Niveauregelwerte der Gleichspannung auf das Höchstmaß regelt, bevor man die Amplitudenregelung vornimmt.

4. Apparat für die Niveauregelung von Videosignalen in einem TV-Empfangsgerät, das mit einem Videodecoder mit einem numerischen Filter und programmierbaren Koeffizienten ausgerüstet ist und das für den Zeilenrücklauf mit einem Löschzeitengenerator versehen ist, bei dem die Versetzung in bezug auf das Synchronisationssignal regelbar ist, mit dem Merkmal, über Vorkehrungen für die Nullstellung der numerischen Koeffizienten des Filters, Vorkehrungen für die Inbetriebnahme des Filters und Vorkehrungen für die Versetzung der Löschzeit in bezug auf das Zeilensysnchronisationssignal zu verfügen.

5. Apparat laut Anspruch 4 mit dem Merkmal, über eine Vorkehrung zu verfügen, die, wenn das Gerät eine bestimmte Steuercodesequenz erhält um "eingeschaltet" zu werden, den Filter auf die vorgesehene Art einstellt und die Löschzeit versetzt.

## Claims

1. A method of controlling the video signal level in a television receiver comprising a video decoder which is provided with a digital filter having programmable coefficients and, for the line retrace, with a blanking period generator whose adjustment with respect to the line synchronizing signal is controllable, characterized by the steps of setting the digital coefficients of the filter to zero, putting the filter into operation, shifting the blanking period with respect to the line synchronizing signal, controlling said levels in accordance with a known method, and resetting the filter to its normal state and starting the adjustment of the blanking period again.

2. A method as claimed in Claim 1, characterized in that in the receiver to be controlled and being provided with independent control means for the video signal amplitudes and for their DC level in the three colors, after having set the digital coefficients of the filter to zero, put the filter into operation and having shifted the blanking period with respect to the line synchronizing signal, the method comprises the steps of decrementing or incrementing the amplitude level control for one of the three colors until the desired amplitude is obtained, controlling the amplitude for the other two colors in the same manner, decrementing or incrementing the DC level control for one of the three colors until the desired black level is obtained, and controlling the DC level for the two other colors in the same manner.

3. A method as claimed in Claim 1 or 2, characterized in that before realising the amplitude control, the three DC level control values are set to a maximum value.

4. A device for controlling the video signal level in a television receiver comprising a video decoder which is provided with a digital filter having programmable coefficients and, for the line retrace, with a blanking period generator whose adjustment with respect to the line synchronizing signal is controllable, characterized in that it comprises means for setting the digital coefficients of the filter to zero, means for putting the filter into operation and means for shifting the blanking period with respect to the line synchronizing signal.

5. A device as claimed in Claim 4, characterized in that it is provided with means for putting the filter into the envisaged state and shifting the blanking period when the receiver receives a particular sequence of command codes intended to put it into the "service" mode.
